# EUROPEAN PATENT APPLICATION

(11) **EP 4 721 585 A1**
(43) Date of publication of application: **08.04.2026**
(21) Application number: 24818355.0
(22) Date of filing: 02.04.2024
(51) Int. Cl.: A24B 15/18

(54) **MANUFACTURING METHOD AND MANUFACTURING DEVICE FOR AEROSOL GENERATING SUBSTRATE**

(30) Priority: 09.06.2023 CN 202310686734
(71) Applicant: Smoore International Holdings Limited, Grand Cayman, KY1-1111 (KY)
(72) Inventor: NI, Jun, Shenzhen, Guangdong 518102 (CN); WEI, Mingwen, Shenzhen, Guangdong 518102 (CN); LI, Wenfeng, Shenzhen, Guangdong 518102 (CN); TANG, Jianguo, Shenzhen, Guangdong 518102 (CN); LIAO, Xiaoxiang, Shenzhen, Guangdong 518102 (CN); JIN, Zutao, Shenzhen, Guangdong 518102 (CN)
(74) Representative: Gevers Patents
(86) International application number: PCT/CN2024/085629
(87) International publication number: WO 2024/250818

(57) **Abstract**

Embodiments of the present application provide a manufacturing method and manufacturing device for an aerosol generating substrate. The manufacturing method for an aerosol generating substrate comprises: carrying out room-temperature extrusion molding on a mixed material, forming the mixed material into an extruded substrate; and cooling and hardening the extruded substrate. The manufacturing method provided by the embodiments of the present application improve the production efficiency.

## Description

### CROSS-REFERENCE TO RELATED APPLICATION

The present application claims priority to Chinese Patent Application No. 202310686734.9, filed on June 09, 2023, the contents of which are hereby incorporated by reference in its entirety.

### TECHNICAL FIELD

The present application relates to the technical field of smoking articles, and in particular to a manufacturing method and a manufacturing apparatus for manufacturing an aerosol-generating substrate.

### BACKGROUND

Smoking articles include smoking articles which form an aerosol by ignition, and smoking articles which form an aerosol by heating without combustion. In a typical smoking article by heating without combustion, it includes an aerosol-generating substrate which can volatilize upon heating to manufacture an aerosol. The aerosol-generating substrate is heated by an external heat source so that the aerosol-generating substrate is heated just enough to emit a flavor, and the aerosol-generating substrate will not burn but is loaded with a large dose of atomizing agent. In use, the atomizing agent is released by heating through a high temperature to form a smoke.

There are mainly three types of aerosol-generating substrates: particle type, traditional cut tobacco type, and sheet type. However, in the related art, a method for manufacturing an aerosol-generating substrate is complicated, the apparatus investment is high, the production efficiency is low, and the environmental pollution is large.

### SUMMARY

In view of this, embodiments of the present application are desirable to provide a manufacturing method and a manufacturing apparatus for manufacturing an aerosol-generating substrate with high production efficiency.

In order to achieve the above object, an embodiment of the present application provides a manufacturing method for manufacturing an aerosol-generating substrate, including the following operations.

Room temperature extrusion molding of a mixed material is performed to allow the mixed material to form an extrusion substrate.

The extrusion substrate is cooled and hardened.

In one embodiment, the operation that the extrusion substrate is cooled and hardened includes the following operation.

The extrusion substrate is placed in a low temperature environment for cooling, in which a temperature in the low temperature environment is lower than a hardening temperature of the extrusion substrate.

In one embodiment, the hardening temperature ranges from -100 °C to 60 °C, and the temperature in the low temperature environment ranges from -270 °C to 60 °C.

In one embodiment, the operation that the extrusion substrate is cooled and hardened includes the following operation. Heat is directly exchanged between the extrusion substrate and a refrigerant.

In one embodiment, the operation that the extrusion substrate is cooled and hardened includes the following operation. Heat is indirectly exchanged between the extrusion substrate and a refrigerant.

In one embodiment, the operation that heat is directly exchanged between the extrusion substrate and the refrigerant includes the following operation. The refrigerant is ejected onto an outer surface of the extrusion substrate.

In one embodiment, a hardness of the extrusion substrate after being cooled and hardened ranges from 1 HB to 200 HB.

In one embodiment, a temperature of the extrusion substrate after being cooled and hardened ranges from -50 °C to 5 °C.

In one embodiment, an extrusion temperature for the room temperature extrusion molding ranges from 35 °C to 70 °C.

In one embodiment, an extrusion pressure for the room temperature extrusion molding ranges from 0.5 bar to 300 bar.

In one embodiment, the extrusion pressure ranges from 20 bar to 80 bar.

In one embodiment, an extrusion manner for the room temperature extrusion molding is one of horizontal extrusion, vertical extrusion, or oblique extrusion.

In one embodiment, after the extrusion substrate is cooled and hardened, the manufacturing method further includes the following operation.

Hot air drying of the extrusion substrate is performed.

In one embodiment, a temperature for the hot air drying ranges from 50 °C to 200 °C.

In one embodiment, during the hot air drying, the manufacturing method further includes the following operation. Auxiliary drying is performed by at least one of microwaves or ultrasonic waves.

In one embodiment, moisture content in the extrusion substrate after the hot air drying ranges from 3% to 20% of a total weight of the extrusion substrate.

In one embodiment, before the hot air drying of the extrusion substrate is performed, the manufacturing method further includes the following operation.

The extrusion substrate after being cooled and hardened is slit.

In one embodiment, in 100 parts by weight of the mixed material, a plant raw material is 30 to 90 parts, an auxiliary agent raw material is 1 to 15 parts, a smoking agent raw material is 5 to 30 parts, an adhesive raw material is 1 to 10 parts, and a flavor raw material is 1 to 15 parts.

An embodiment of the present application provides a manufacturing apparatus for manufacturing an aerosol-generating substrate, including an extruder and a hardening device.

The extruder is configured to perform room temperature extrusion molding of a mixed material to allow the mixed material to form an extrusion substrate.

The hardening device is configured to cool and harden the extrusion substrate.

In one embodiment, the hardening device includes a refrigerant supply and a container, the container is provided with an accommodating cavity configured to accommodate the extrusion substrate, and the refrigerant supply is configured to supply a refrigerant to the accommodating cavity.

In one embodiment, the container is provided with a liquid inlet groove communicating with the accommodating cavity.

In one embodiment, the manufacturing apparatus includes a first conveying device provided with a first conveying belt, and a part of the first conveying belt is located in the accommodating cavity.

In one embodiment, a plurality of medium accommodating grooves are provided on the first conveying belt, and extend along a conveying direction of the first conveying belt.

In one embodiment, the hardening device includes a refrigerant supply and a first cooling pipe, the first cooling pipe includes a pipe body provided with a first cooling passage, and at least one refrigerant ejection port provided on a side wall of the pipe body and communicating with the first cooling passage, the first cooling passage is configured to accommodate the extrusion substrate, and the refrigerant supply ejects a refrigerant into the first cooling passage through the refrigerant ejection port.

In one embodiment, the first cooling pipe includes a plurality of refrigerant ejection ports, some of the plurality of refrigerant ejection ports are provided at intervals along a peripheral side of the pipe body, and some of the plurality of refrigerant ejection ports are provided at intervals along an extension direction of the first cooling passage.

In one embodiment, the refrigerant ejection port is provided with an inlet end, and an outlet end communicating with the first cooling passage, the refrigerant ejection port is disposed inclined with respect to an extension direction of the first cooling passage, and the outlet end is located at a side of the inlet end facing away from an inlet of the first cooling passage.

In one embodiment, the hardening device includes a refrigerant supply and a second cooling pipe, the second cooling pipe includes a first inner pipe and a first outer pipe, the first inner pipe is provided with a second cooling passage accommodating the extrusion substrate, a first refrigerant cavity is formed between the first inner pipe and the first outer pipe, at least one communication passage communicating with the first refrigerant cavity and the second cooling passage is arranged on a side wall of the first inner pipe, and the refrigerant supply communicates with the first refrigerant cavity.

In one embodiment, there are a plurality of communication passages, some communication passages of the plurality of communication passages are provided at intervals along a peripheral side of the first inner pipe, and some communication passages of the plurality of communication passages are provided at intervals along an extension direction of the second cooling passage.

In one embodiment, the communication passage is provided with an inlet end communicating with the first refrigerant cavity, and an outlet end communicating with the second cooling passage, the communication passage is disposed inclined with respect to an extension direction of the second cooling passage, and the outlet end is located at a side of the inlet end facing away from an inlet of the second cooling passage.

In one embodiment, the hardening device includes a refrigerant supply and a third cooling pipe, the third cooling pipe includes a second inner pipe and a second outer pipe, the second inner pipe is provided with a heat exchange passage, a second refrigerant cavity for storing a refrigerant is formed between the second inner pipe and the second outer pipe, the heat exchange passage is configured to accommodate the extrusion substrate, and the refrigerant supply communicates with the second refrigerant cavity.

Embodiments of the present application provide a manufacturing method and a manufacturing apparatus for manufacturing an aerosol-generating substrate. The manufacturing method for manufacturing the aerosol-generating substrate mainly includes the following operations. The room temperature extrusion molding of the mixed material is performed to allow the mixed material to form the mixed material, and then the mixed material is cooled and hardened. The room temperature extrusion molding can ensure that the rheological properties of the slurry are stable and the endogenous components of the extrusion substrate are stable. Since the texture of the extrusion substrate extruded by the room temperature extrusion molding is relatively soft, the hardness of the extrusion substrate can be improved by cooling and hardening the extrusion substrate to facilitate subsequent processing. The combination of the room temperature extrusion molding as well as the cooling and hardening can not only achieve uniform and stable aerosol-generating substrate, but also reduce production difficulty, which may improve the yield rate while improving the production efficiency.

### BRIEF DESCRIPTION OF THE DRAWINGS

FIG. 1 is a schematic diagram of a manufacturing method for manufacturing an aerosol-generating substrate according to an embodiment of the present application.
FIG. 2 is a schematic diagram of a manufacturing apparatus for manufacturing an aerosol-generating substrate according to an embodiment of the present application, in which a mixed material is simultaneously shown.
FIG. 3 is a cross-sectional view of the manufacturing apparatus shown in FIG. 2, in which an extrusion substrate is also shown.
FIG. 4 is a schematic diagram of another manufacturing apparatus for manufacturing an aerosol-generating substrate according to an embodiment of the present application, in which a mixed material and an extrusion substrate are simultaneously shown.
FIG. 5 is a cross-sectional view of the manufacturing apparatus shown in FIG. 4.
FIG. 6 is a schematic diagram of a die opening of a first type of extrusion die according to an embodiment of the present application.
FIG. 7 is a schematic diagram of a second type of extrusion die according to an embodiment of the present application, in which an extrusion substrate is simultaneously shown.
FIG. 8 is a schematic diagram of a third type of extrusion die according to an embodiment of the present application, in which an extrusion substrate is simultaneously shown.
FIG. 9 is a schematic diagram of a first type of hardening device according to an embodiment of the present application, in which an extrusion die and an extrusion substrate are simultaneously shown.
FIG. 10 is a cross-sectional view of the hardening device shown in FIG. 9.
FIG. 11 is a schematic diagram showing a cooperation relationship of an extrusion die, an extrusion substrate, and a second type of hardening device according to an embodiment of the present application.
FIG. 12 is a schematic diagram of the hardening device shown in FIG. 11, in which a die opening and an extrusion substrate are simultaneously shown.
FIG. 13 is a cross-sectional view of the hardening device shown in FIG. 12.
FIG. 14 is a cross-sectional view of a third type of hardening device according to an embodiment of the present application.
FIG. 15 is a cross-sectional view of a fourth type of hardening device according to an embodiment of the present application.
FIG. 16 is a schematic diagram of a first type of extrusion substrate according to an embodiment of the present application.
FIG. 17 is a schematic diagram of a second type of extrusion substrate according to an embodiment of the present application.
FIG. 18 is a schematic diagram of a third type of extrusion substrate according to an embodiment of the present application.

### DETAILED DESCRIPTION

An embodiment of the present application provides a manufacturing method for manufacturing an aerosol-generating substrate. The aerosol-generating substrate is used in conjunction with an electronic atomization device provided with a heating assembly. In particular, the heating assembly heats and atomizes the aerosol-generating substrate to manufacture an aerosol for consumption by a user or for use in medicine, cosmetics, or the like.

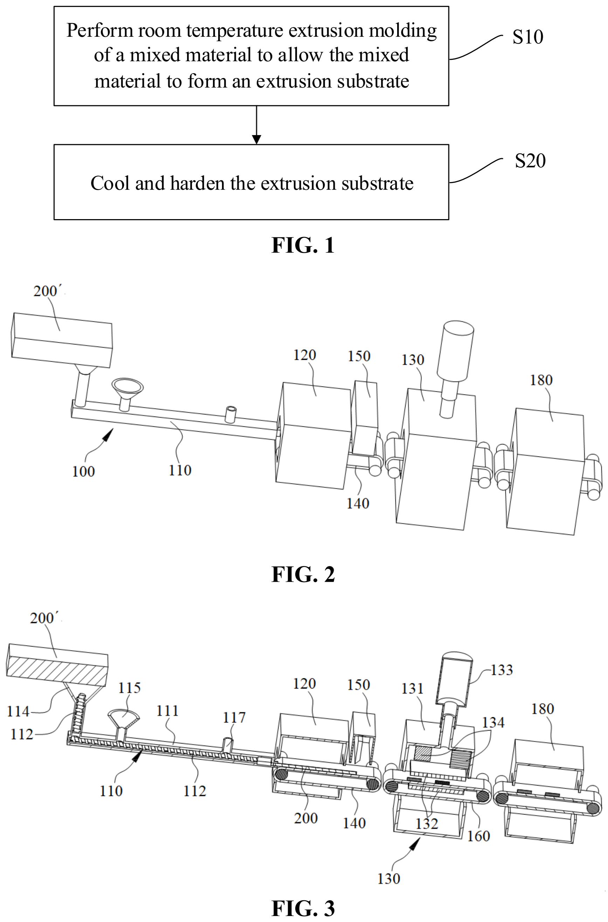

Referring to FIG. 1, the manufacturing method for manufacturing the aerosol-generating substrate includes the following operations.

At operation S10, room temperature extrusion molding of a mixed material is performed to allow the mixed material to form an extrusion substrate.

Specifically, extrusion molding refers to a processing method in which a material is added into an extruder, is pushed forward by a screw through an action between a barrel and the screw of the extruder, and continuously passes through an extrusion die arranged at an outlet of the extruder, to manufacture various cross-sectional products or semi-finished products. The material formed by the extrusion molding is in the shape of a strip. The mixed material is a material configured to manufacture the aerosol-generating substrate, and is a mixture of a solid material and a liquid material. That is, the mixed material contains a certain amount of moisture.

In the field of extrusion molding, an extrusion temperature (i.e., the temperature in the barrel of the extruder) between 10 °C and 90 °C (inclusive of 10 °C and 90 °C) is defined as the room temperature, an extrusion temperature lower than 10 °C is defined as a low temperature, and an extrusion temperature higher than 90 °C is defined as a high temperature.

The room temperature extrusion molding of the mixed material described in the embodiment of the present application refers to extrusion molding of the mixture at the extrusion temperature in a range of 10 °C to 90 °C.

The temperature will affect the fluidity of the mixture in the extruder and the smoothness of the outer surface of the extrusion substrate. When the extrusion temperature is lower than 10 °C, the fluidity of the mixed material is poor, the production speed of the extruder is slow, the efficiency of the extruder is low, and the torque provided by the extruder is high at this temperature, which affects the service life of the extruder.

When the extrusion temperature is higher than 90 °C, the flow of the mixed material is fast, and the pressure of the mixed material at the outlet of the extruder is small, which is not beneficial to the molding of the mixed material, thus leading to a decrease in the yield rate. In addition, the energy consumption of the extruder is high at this temperature, which increases the production cost.

When the extrusion temperature is between 10 °C and 90 °C, the fluidity of the mixed material is better, which is beneficial to the molding of the mixed material, and can ensure that the rheological characteristics of the mixed material are stable, and the endogenous components of the extrusion substrate are stable. In addition, at this temperature, the torque provided by the extruder is low, and the energy consumption of the extruder is low, which may reduce the production cost while improving the service life of the extruder.

More preferably, the extrusion temperature for the room temperature extrusion molding may range from 35 °C to 70 °C (inclusive of 35 °C and 70 °C).

At operation S20, the extrusion substrate is cooled and hardened.

After being cooled and hardened, the hardness of the extrusion substrate increases, and accordingly, the temperature of the extrusion substrate decreases.

Exemplarily, the hardness of the extrusion substrate extruded by the room temperature extrusion molding may range from 0 HB to 100 HB (inclusive of 0 HB and 100 HB) before being cooled and hardened, and the hardness of the extrusion substrate may range from 1 HB to 200 HB (inclusive of 1 HB and 200 HB) after being cooled and hardened.

More preferably, the hardness of the extrusion substrate extruded by the room temperature extrusion molding may range from 1 HB to 60 HB (inclusive of 1 HB and 60 HB) before being cooled and hardened, and the hardness of the extrusion substrate may range from 40 HB to 120 HB (inclusive of 40 HB and 120 HB) after being cooled and hardened.

Exemplarily, the temperature of the extrusion substrate may range from 0 °C to 40 °C (inclusive of 0 °C and 40 °C) before being cooled and hardened, and the temperature of the extrusion substrate may range from -50 °C to 5 °C (inclusive of -50 °C and 5 °C) after being cooled and hardened.

It should be noted that the operation S20 is not the last operation of the method. That is, the extrusion substrate after being cooled and hardened is only a semi-finished product of the aerosol-generating substrate, and there are other subsequent processes, including but not limited to drying, slitting, packaging and the like, and some adoptable processes will be described in detail later.

Another embodiment of the present application also provides a manufacturing apparatus 100 for manufacturing an aerosol-generating substrate. Referring to FIG. 2 to FIG. 5, the manufacturing apparatus 100 includes an extruder 110 and a hardening device 120.

The extruder 110 is configured to perform room temperature extrusion molding of a mixed material 200', to allow the mixed material 200' to form an extrusion substrate 200.

The extruder 110 may be a single screw extruder or a twin screw extruder. Preferably, the extruder 110 is a twin screw extruder, because compared with the single screw extruder, the twin screw extruder can further homogenize the mixed material during the conveying process of the mixed material 200', which may improve the stability of the product, and the extrusion efficiency of the twin screw extruder is higher than the extrusion efficiency of the single screw extruder.

The hardening device 120 is configured to cool and harden the extrusion substrate 200.

That is, the manufacturing method for manufacturing the aerosol-generating substrate according to the embodiment of the present application mainly includes the following operations. The room temperature extrusion molding of the mixed material is performed to allow the mixed material to form the mixed material, and then the mixed material is cooled and hardened. The room temperature extrusion molding can ensure that the rheological properties of the slurry are stable and the endogenous components of the extruded extrusion substrate are stable. Since the texture of the extrusion substrate extruded by the room temperature extrusion molding is relatively soft, the hardness of the extrusion substrate can be improved by cooling and hardening the extrusion substrate to facilitate subsequent processing. The combination of the room temperature extrusion molding as well as the cooling and hardening can not only achieve uniform and stable aerosol-generating substrate, but also reduce production difficulty, which may improve the yield rate while improving the production efficiency.

The mixed material of the embodiment of the present application may include a plant raw material, an auxiliary agent raw material, a smoking agent raw material, an adhesive raw material, and a flavor raw material.

The plant raw material is configured to generate an aerosol when heated. The auxiliary agent raw material is configured to provide skeleton support for the plant raw materials. The smoking agent raw material is configured to generate smoke when heated. The adhesive raw material is configured to bind the various raw materials. The flavor raw material is configured to provide a characteristic aroma. In this way, the plant raw material and the smoking agent raw material can ensure the amount of the generated aerosol, while the flavor raw material can improve the release of aroma during smoking and improve the user experience. The auxiliary agent raw material can not only improve the fluidity of the mixed material, but also make the aerosol-generating substrate have a porous structure, to facilitate the extraction and flow of the aerosol. The adhesive raw material ensures that the plant raw material, the auxiliary agent raw material and the like form a stable mixture, which avoids a loose structure.

Exemplarily, the plant raw material may be one or more combinations of powders formed after a crushing treatment of tobacco raw materials, tobacco leaf fragments, tobacco stalks, tobacco powders, flavored plants, and the like. The plant raw material is the core source of flavor, and endogenous substances in the plant raw material can give users physiological satisfaction. The endogenous substances such as alkaloids enter the human bloodstream, and promote the generation of dopamine by the pituitary gland, thereby obtaining physiological satisfaction.

Exemplarily, the auxiliary agent raw material may be one or more combinations of inorganic fillers, lubricants, and emulsifiers. The inorganic fillers include one or more combinations of heavy calcium carbonate, light calcium carbonate, zeolite, attapulgite, talc, and diatomaceous earth. The inorganic fillers can provide skeleton support for the plant raw material, and at the same time, the inorganic fillers are also provided with micropores, which can improve the porosity of the aerosol-generating substrate, thereby increasing the release rate of the aerosol. The lubricants include one or more combinations of candelilla wax, carnauba wax, shellac, sunflower wax, rice bran, beeswax, stearic acid, and palmitic acid. The lubricants can increase the fluidity of the plant raw material powder, reduce the friction between the plant raw material powder, make the overall density of the plant raw material powder distribution more uniform, and also reduce the pressure required during the extrusion molding, and reduce the wear of the die opening. The emulsifiers include one or more combinations of polyglycerol fatty acid esters, Tween-80, and polyvinyl alcohol. To a certain extent, the emulsifiers can slow down the loss of flavor substances during storage, increase the stability of the flavor substances and improve the sensory quality of products.

Exemplarily, the smoking agent raw material may include one or more combinations of monohydric alcohol (such as menthol); polyol (such as propylene glycol, glycerol, triethylene glycol, 1, 3-butanediol and tetraethylene glycol); ester of polyol (such as glyceryl triacetate, triethyl citrate, glyceryl diacetate mixtures, triethyl citrate, benzyl benzoate, tributyrate); monocarboxylic acid; dicarboxylic acid; polycarboxylic acid (such as lauric acid, myristic acid) or aliphatic ester of polycarboxylic acid (such as dimethyl dodecanedioate, dimethyl tetradecanedioate, erythritol, 1, 3-butanediol, tetraethylene glycol, triethyl citrate, propylene carbonate, ethyl laurate, Triactin, meso-erythritol, glyceryl diacetate mixture, diethyl suberate, triethyl citrate, benzyl benzoate, benzyl phenylacetate, ethyl vanilate, glyceryl tributyrate, lauryl acetate).

Exemplarily, the adhesive raw material is in close contact with the component raw material interface by wetting together with the component raw material interface to create an intermolecular attractive force, thereby bonding to the component raw material, such as a powder, a liquid, or the like. The adhesive raw material may be one or more combinations of natural plant extracts, non-ionized modified viscous polysaccharides including tamarind polysaccharides and guar gum, and modified cellulose (such as carboxymethyl cellulose). The adhesive is configured to bond the particles together, which are not easy to loosen, and the adhesive further improves the water resistance of the aerosol-generating substrate, and is harmless to the human body.

Exemplarily, the flavor raw material is configured to provide characteristic aroma, such as hay aroma, roasted sweet aroma, solid or liquid substances of nicotine. The flavor raw material may include one or more combinations of tobacco or other plants, flavored plant extracts, extractum, essential oils, absolute oils. The flavor raw material may include a monomeric flavoring substance, for example, one or more combinations of macrotrienone, neophytadiene, geraniol, nerol, and the like.

Exemplarily, in 100 parts by weight of the mixed material, the plant raw material may be 30 to 90 parts, the auxiliary agent raw material may be 1 to 15 parts, the smoking agent raw material may be 5 to 30 parts, the adhesive raw material may be 1 to 10 parts, and the flavor raw material may be 1 to 15 parts.

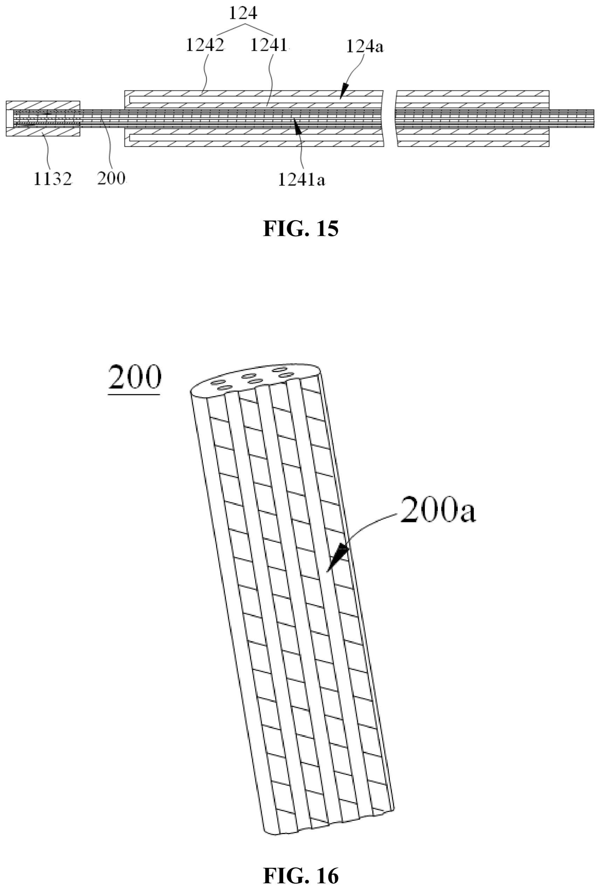

Depending on the configuration of the extrusion die arranged at the outlet of the extruder, the extrusion substrate 200 with different configuration forms can be extruded. For example, with reference to FIG. 16 to FIG. 18, an extrusion substrate 200 provided with an air passage 200a can be extruded.

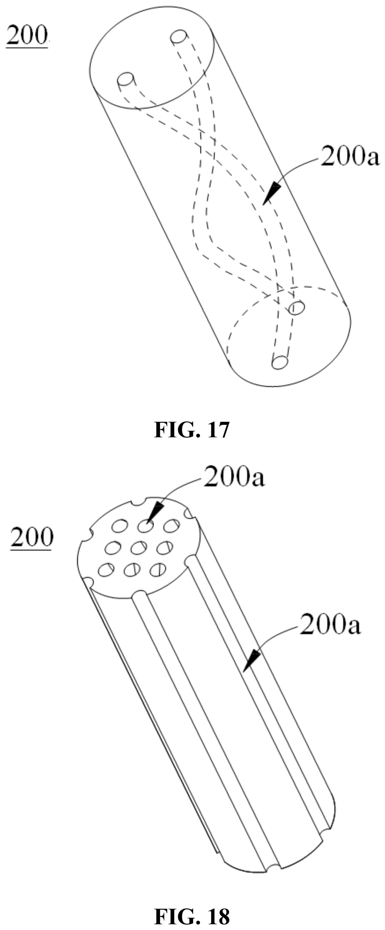

There may be one air passage 200a or a plurality of air passages 200a. The air passage 200a may be a straight air passage as shown in FIG. 16, or a spiral air passage as shown in FIG. 17, or a combination of a straight air passage and a spiral air passage. The straight air passage is an air passage extending along a straight line, or an extension direction of the straight air passage is a straight line.

The spiral air passage is an air passage that at least a portion thereof along the extension direction includes a curve having a nonzero curvature. For example, along the extension direction of the spiral air passage, the spiral air passage may be in a structure form including a curve section having a nonzero curvature and a straight line section having a curvature of zero, or the spiral air passage may be in a structure form only including a curve section having a nonzero curvature without a straight line section having a curvature of zero. That is, the spiral air passage does not extend along a straight line from a start point to an end point of the spiral air passage in the extension direction.

The air passage 200a may be located inside the extrusion substrate 200 as shown in FIG. 16 and FIG. 17, or may be located on an outer side wall of the extrusion substrate 200. When there are a plurality of air passages 200a, as shown in FIG. 18, a part of the plurality of air passages 200a may be located inside the extrusion substrate 200, and another part of the plurality of air passages 200a may be located on the outer side wall of the extrusion substrate 200.

The shape of the cross-section of the air passage 200a located inside the extrusion substrate 200 is not limited. For example, the shape of the cross-section may be circular, polygonal (including but not limited to triangular, square, prismatic, etc.), elliptical, track-shaped, or special-shaped, in which the special shapes refer to other symmetrical or asymmetrical shapes other than the shapes listed above.

The shape of the cross-section of the air passage 200a located on the outer side wall of the extrusion substrate 200 may be semi-circular, semi-elliptical, polygonal, or special-shaped, in which the special shapes refer to other symmetrical or asymmetrical shapes other than the shapes listed above.

The air passage 200a is configured to increase the surface area of the aerosol-generating substrate (a side wall of the air passage 200a is equivalent to a part of a surface of the aerosol-generating substrate), so that heat acting on the aerosol-generating substrate can enter the interior of the aerosol-generating substrate from the surface of the aerosol-generating substrate, which may improve the heating efficiency.

It should be noted that, in the related art, naturally formed micropores exist inside some aerosol-generating substrates. For example, for an aerosol-generating substrate with a particle combination, gaps between particles constitute micropores. However, the air passage 200a described herein is different from the micropores in that the air passage 200a described herein is a macroscopic pore, the micropores are microscopic pores, and the dimensions such as the cross-sectional area and the length of the air passage 200a are much larger than those of the micropores. The air passage 200a is mainly formed by processing, thus the dimensions such as the cross-sectional area and the length of the air passage 200a can be changed according to the design requirements, while the dimensions of the micropores are determined by the gaps between the particles, and the dimensions such as the cross-sectional area and the length of the micropores are naturally formed by the extrusion process.

In one embodiment, the extrusion pressure for the room temperature extrusion molding may range from 0.5 bar to 300 bar (inclusive of 0.5 bar and 300 bar).

The extrusion pressure described in the embodiment of the present application refers to the extrusion pressure of the extrusion die located at the outlet of the extruder.

The extrusion pressure has an impact on the molding shape, surface smoothness, yield rate and production rate of extrusion substrate. When the extrusion pressure is lower than 0.5 bar, the molding rate of the extrusion substrate is low, and the defect rate of the product increases, which in turn leads to the slowdown of the production rate and the increase of the production cost. When the extrusion pressure is higher than 300 bar, the load of a transmission structure of the extruder is high (the torque required to provide is high), which leads to the reduction of the service life of the extruder. Therefore, controlling the extrusion pressure in the range from 0.5 bar to 300 bar can not only improve the molding rate of the extrusion substrate, but also prolong the service life of the extruder.

More preferably, the extrusion pressure for the room temperature extrusion molding may range from 20 bar to 80 bar (inclusive of 20 bar and 80 bar).

In one embodiment, the extrusion manner for the room temperature extrusion molding may be horizontal extrusion.

The horizontal extrusion means that the extrusion die located at the outlet of the extruder is positioned horizontally, and the extrusion substrate is extruded in a horizontal direction (such as the extruder 110 shown in FIG. 2 and FIG. 3), or the extrusion direction of the extrusion substrate is parallel to the horizontal plane.

For an extrusion substrate forming a spiral air passage, as the extrusion substrate passes through the extrusion die located at the outlet of the extruder, the die opening of the extrusion die rotates and the extrusion substrate does not rotate, and the extrusion substrate extruded by the rotating die opening passes directly into a conveying device (such as a first conveying device 140 in FIG. 2 and FIG. 3). Since the rotation of the die opening causes some stress to the extrusion substrate, and the horizontal extrusion can reduce the direct release of stress from the extrusion substrate (the resulting stress can be relieved by heating), the horizontal extrusion can improve the yield rate of aerosol-generating substrates provided with spiral air passages.

In one embodiment, the extrusion manner for the room temperature extrusion molding may be vertical extrusion.

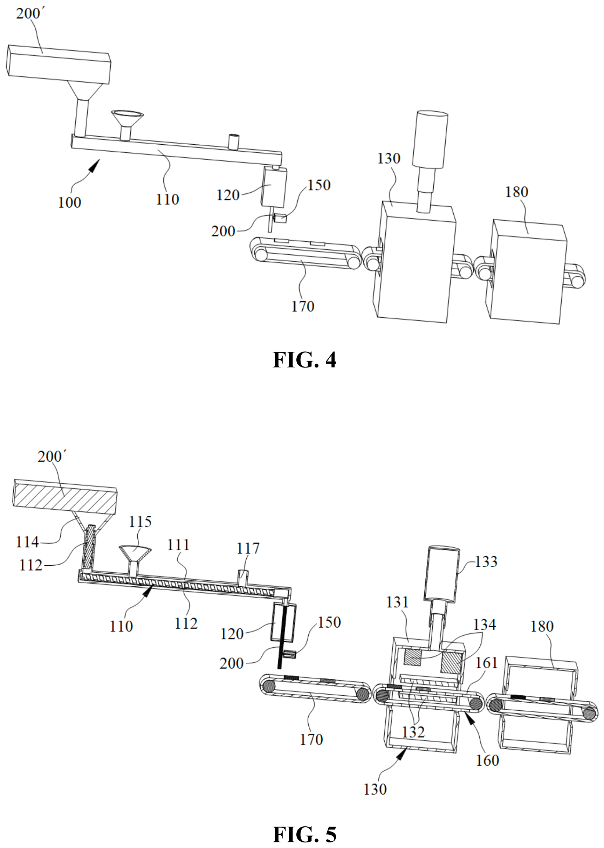

The vertical extrusion means that the extrusion die located at the outlet of the extruder is positioned downward, and the extrusion substrate is extruded in the direction of gravity (such as the extruder 110 shown in FIG. 4 and FIG. 5), or the extrusion direction of the extrusion substrate is perpendicular to the horizontal plane.

Exemplarily, referring to FIG. 4 and FIG. 5, the manufacturing apparatus 100 may be provided with a third conveying device 170. After the extrusion substrate 200 is extruded from the extruder 110, the extrusion substrate 200 directly enters the third conveying device 170.

For extrusion substrates forming straight air passages, the vertical extrusion can improve the yield rate, reduce the input cost of the extruder, and also reduce the floor space of the extruder.

In one embodiment, the extrusion manner for the room temperature extrusion molding may be oblique extrusion.

The oblique extrusion means that the extrusion die located at the outlet of the extruder is arranged obliquely, and an angle between the extrusion direction of the extrusion substrate and the horizontal plane is greater than 0 ° and less than 90 °.

The oblique extrusion can not only reduce the extrusion pressure of the mixed material, but also facilitate the space design of other devices.

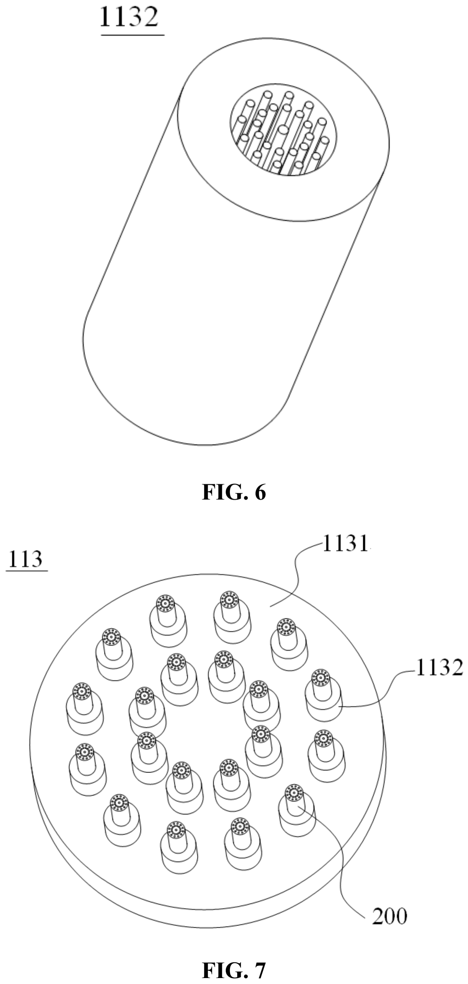

In one embodiment, referring to FIG. 6, the extrusion die 113 may be a single-die single-opening die set. That is, there is one die base 1131 at the outlet of the extruder 110, one die opening 1132 is provided at an discharge end of the die base 1131, and the mixed material 200' may form one extrusion substrate 200 provided with an air passage 200a after passing through the die opening 1132.

In one embodiment, referring to FIG. 7, the extrusion die 113 may also be a single-die multi-opening die set. That is, there is one die base 1131 at the outlet of the extruder 110, a plurality of die openings 1132 are provided at the discharge end of the die base 1131, and the mixed material 200' may form a plurality of extrusion substrates 200 simultaneously after passing through the plurality of die openings 1132. When the size of the screw 112 of the extruder 110 is relatively large, a single-die multi-opening die set can be selected, which can improve the production efficiency and be more suitable for mass production.

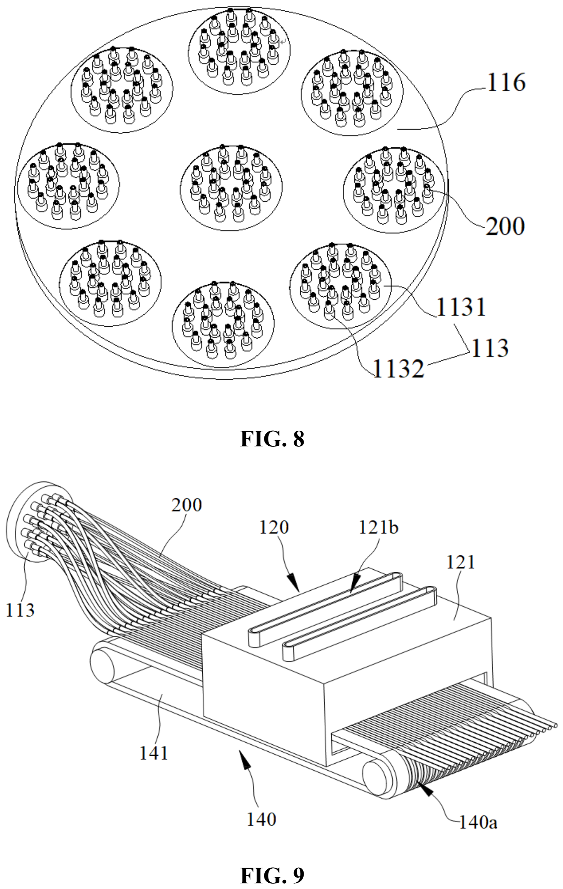

In one embodiment, referring to FIG. 8, the extrusion die 113 may also be a multi-die multi-opening die set. That is, a plurality of die bases 1131 are connected to a connector 116 located at the outlet of the extruder 110, a plurality of die openings 1132 are provided at the discharge end of each die base 1131, and the mixed material 200' may form a plurality of extrusion substrates 200 simultaneously after passing through the plurality of die openings 1132 of each die base 1131. When the size of the screw 112 of the extruder 110 is relatively large, a multi-die multi-opening die set can be selected, which can improve the production efficiency and be more suitable for mass production.

In one embodiment, the cooling and hardening may be realized by placing the extrusion substrate in a low temperature environment for cooling, in which the temperature of the low temperature environment is lower than the hardening temperature of the extrusion substrate.

That is, the extrusion substrate may be conveyed to a low temperature environment for freezing. The temperature in the low temperature environment needs to be lower than the hardening temperature of the extrusion substrate, in order to meet the hardening requirements.

Exemplarily, on the premise that the temperature in the low temperature environment is lower than the hardening temperature of the extrusion substrate, if the hardening temperature of the extrusion substrate ranges from -100 °C to 60 °C (inclusive of -100 °C and 60 °C), the temperature in the low temperature environment may range from - 270 °C to 60 °C (inclusive of -270 °C and 60 °C).

More preferably, if the hardening temperature of the extrusion substrate ranges from -30 °C to 40 °C (inclusive of -30 °C and 40 °C), the temperature in the low temperature environment may range from -100 °C to 40 °C (inclusive of -100 °C and 40 °C).

In one embodiment, the cooling and hardening may also be realized by cooling the extrusion substrate with a refrigerant. The form of the refrigerant may be a liquid state, such as liquid nitrogen or liquid air, or a gaseous or solid state.

In one embodiment, the extrusion substrate may directly exchange heat with the refrigerant.

Direct heat exchange refers to a heat exchange between heat exchange mediums through a direct contact. That is, the extrusion substrate is in direct contact with the refrigerant.

The advantage of direct heat exchange between the extrusion substrate and the refrigerant is that the surface of the heat exchange medium can be cooled and hardened quickly, so that the extrusion substrate can maintain morphological stability, which facilitates the continuous production and improves the production efficiency.

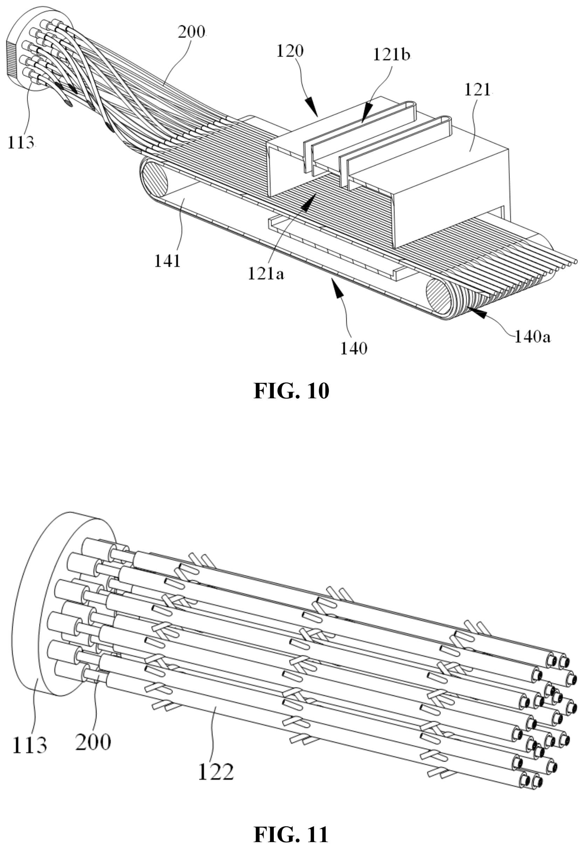

Exemplarily, referring to FIG. 9 and FIG. 10, the hardening device 120 may include a refrigerant supply (not shown) and a container 121 provided with an accommodating cavity 121a, the accommodating cavity 121a is configured to accommodate the extrusion substrate 200, and the refrigerant supply is configured to supply a refrigerant to the accommodating cavity 121a. That is, the extrusion substrate 200 extruded from the extruder 110 is placed in the accommodating cavity 121a, and is in contact with the refrigerant supplied by the refrigerant supply.

Referring to FIG. 9 and FIG. 10, for the liquid refrigerant, the container 121 may be provided with a liquid inlet groove 121b communicating with the accommodating cavity 121a, the refrigerant supply ejects the liquid refrigerant into the liquid inlet groove 121b, and the refrigerant enters the accommodating cavity 121a through the liquid inlet groove 121b and comes into contact with the extrusion substrate 200 in the accommodating cavity 121a to exchange heat.

Referring to FIG. 9 and FIG. 10, in order to facilitate conveying of the extrusion substrate 200, the manufacturing apparatus 100 may be provided with a first conveying device 140, the first conveying device 140 is provided with a first conveying belt 141, and a part of the first conveying belt 141 is located in the accommodating cavity 121a. The first conveying device 140 may convey the extrusion substrate 200 extruded from the extruder 110 into the accommodating cavity 121a through the first conveying belt 141, and convey the cooled and hardened extrusion substrate 200 out of the accommodating cavity 121a.

Referring to FIG. 9 and FIG. 10, when the extrusion die 113 can extrude a plurality of extrusion substrates 200 simultaneously, since the hardness of the extrusion substrates 200 just extruded is low, a plurality of medium accommodating grooves 140a may be provided on the first conveying belt 141, in order to prevent the plurality of extrusion substrates 200 from sticking together. The plurality of medium accommodating grooves 140a extend along a conveying direction of the first conveying belt 141. Each of the plurality of extrusion substrates 200 extruded from the extruder 110 enters a respective one of the plurality of medium accommodating groove 140a. That is, the extrusion substrates 200 are separated from each other by the plurality of medium accommodating grooves 140a.

Exemplarily, the refrigerant may be ejected onto an outer surface of the extrusion substrate.

Ejection refers to the ejection of the refrigerant under a certain pressure.

For example, referring to FIG. 11 to FIG. 13, the hardening device 120 may also be provided with a refrigerant supply (not shown), and a first cooling pipe 122 provided with a first cooling passage 1221a. The first cooling pipe 122 includes a pipe body 1221 provided with the first cooling passage 1221a, and a refrigerant ejection port 1222 provided on a side wall of the pipe body 1221 and communicating with the first cooling passage 1221a. The first cooling passage 1221a is configured to accommodate the extrusion substrate 200, and the refrigerant supply ejects refrigerant into the first cooling passage 1221a through the refrigerant ejection port 1222.

That is, the extrusion substrate 200 extruded from the extruder 110 enters the first cooling passage 1221a, and the refrigerant supply ejects the refrigerant into the first cooling passage 1221a through the refrigerant ejection port 1222 to cool the extrusion substrate 200 in the first cooling passage 1221a.

Referring to FIG. 11, the number of first cooling pipes 122 corresponds to the number of extrusion substrates 200 extruded from the extruder 110.

The cross-sectional shape of the first cooling pipe 122 is not limited. Exemplarily, the cross-sectional shape of the first cooling pipe 122 may be a closed shape, for example, a circle, an oval, a rectangle, or the like. In other embodiments, the cross-sectional shape thereof may be a non-closed shape, for example, an L-shaped or U-shaped or V-shaped or arc-shaped groove structure, or the like.

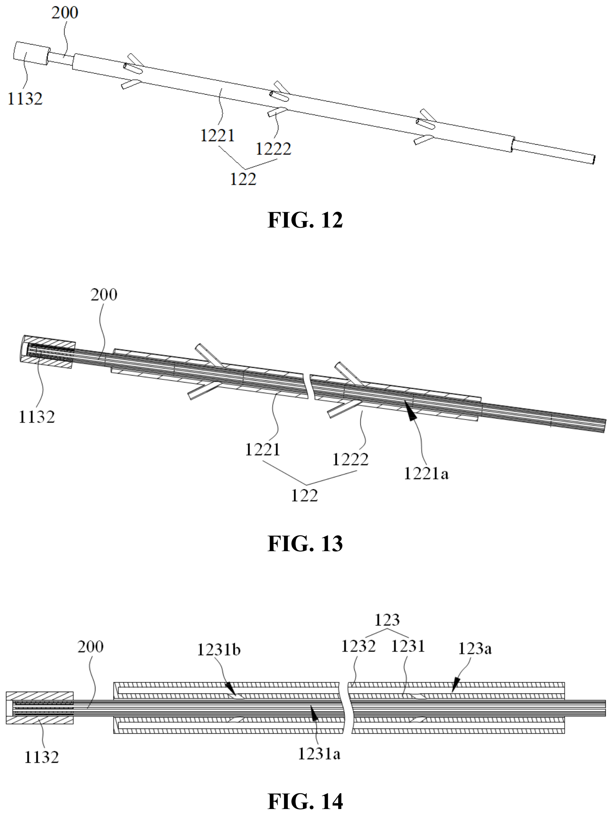

Referring to FIG. 12 and FIG. 13, the refrigerant ejection port 1222 is provided with an inlet end, and an outlet end communicating with the first cooling passage 1221a, the refrigerant ejection port 1222 may be disposed inclined with respect to the extension direction of the first cooling passage 1221a, and the outlet end is located at a side of the inlet end facing away from an inlet of the first cooling passage 1221a (i.e., the inlet end is closer to the die opening 1132 in FIG. 12). That is, the refrigerant entering the first cooling passage 1221a from the refrigerant ejection port 1222 flows toward an outlet of the first cooling passage 1221a. In this way, it is possible to better prevent the refrigerant from obstructing the movement of the extrusion substrate 200 in the first cooling passage 1221a.

In addition, it should be noted that, since the extrusion substrate 200 extruded from the extruder 110 continuously enters the first cooling passage 1221a, the extrusion substrate 200 in the first cooling passage 1221a can be pushed to continuously move toward the outlet of the first cooling passage 1221a.

Further, referring to FIG. 11 to FIG. 13, the first cooling pipe 122 may be provided with a plurality of refrigerant ejection ports 1222, some of the plurality of refrigerant ejection ports 1222 are provided at intervals along a peripheral side of the pipe body 1221, and some of the plurality of refrigerant ejection ports 1222 are provided at intervals along the extension direction of the first cooling passage 1221a. The refrigerant is ejected onto the outer surface of the extrusion substrate 200 through the refrigerant ejection ports 1222, whereby the refrigerant can be wrapped around the outer surface of the extrusion substrate 200, i.e., the extrusion substrate 200 is in a "suspension" posture in the first cooling passage 1221a in which the extrusion substrate 200 is isolated from the inner side wall of the first cooling passage 1221a.

In addition, in order to achieve a better "suspension" effect, more preferably, an ejection pressure of the refrigerant ejection port 1222 located at a lower side of the first cooling passage 1221a may be greater than an ejection pressure of the refrigerant ejection port 1222 located at an upper side of the first cooling passage 1221a, to balance the gravity of the extrusion substrate 200.

Since the refrigerant is wrapped around the outer surface of the extrusion substrate 200, the refrigerant isolates the extrusion substrate 200 from the inner side wall of the first cooling passage 1221a, and the extrusion substrate 200 does not come into contact with the inner side wall of the first cooling passage 1221a. In this way, it is possible to effectively prevent the problem of deformation of the extrusion substrate 200 caused by the friction between the extrusion substrate 200 and the inner side wall of the first cooling passage 1221a.

Exemplarily, referring to FIG. 14, the hardening device 120 may also include a refrigerant supply (not shown) and a second cooling pipe 123. The second cooling pipe 123 includes a first inner pipe 1231 and a first outer pipe 1232. The first inner pipe 1231 is provided with a second cooling passage 1231a accommodating the extrusion substrate 200. A first refrigerant cavity 123a is formed between the first inner pipe 1231 and the first outer pipe 1232. A communication passage 1231b communicating with the first refrigerant cavity 123a and the second cooling passage 1231a is arranged on a side wall of the first inner pipe 1231. The refrigerant supply communicates with the first refrigerant cavity 123a.

That is, the extrusion substrate 200 extruded from the extruder 110 enters the second cooling passage 1231a, and the refrigerant supplied by the refrigerant supply enters the first refrigerant cavity 123a, enters the second cooling passage 1231a through the communication passage 1231b and comes into direct contact with the extrusion substrate 200.

There may be one communication passage 1231b or a plurality of communication passages 1231b.

Referring to FIG. 14, when there are a plurality of communication passages 1231b, some communication passages 1231b of the plurality of communication passages 1231b may be provided at intervals along a peripheral side of the first inner pipe 1231, and some communication passages 1231b of the plurality of communication passages 1231b may be provided at intervals along the extension direction of the second cooling passage 1231a. That is, the refrigerant in the first refrigerant cavity 123a may enter the second cooling passage 1231a from a plurality of directions and a plurality of positions, and the refrigerant flowing into the second cooling passage 1231a may also be wrapped around the outer surface of the extrusion substrate 200. In this way, the extrusion substrate 200 is in a "suspension" posture in the second cooling passage 1231a in which the extrusion substrate 200 is isolated from the inner side wall of the second cooling passage 1231a.

Further, referring to FIG. 14, the communication passage 1231b is provided with an inlet end communicating with the first refrigerant cavity 123a, and an outlet end communicating with the second cooling passage 1231a, the communication passage 1231b may be disposed inclined with respect to the extension direction of the second cooling passage 1231a, and the outlet end is located at a side of the inlet end facing away from an inlet of the second cooling passage 1231a (i.e., the inlet end is closer to the die opening 1132 in FIG. 14). That is, the refrigerant entering the second cooling passage 1231a from the communication passage 1231b flows toward an outlet of the second cooling passage 1231a. In this way, it is possible to better prevent the refrigerant from obstructing the movement of the extrusion substrate 200 in the second cooling passage 1231a.

In other embodiments, the extrusion substrate 200 may also be in contact with the inner side wall of the first cooling passage 1221a, and the inner side wall of the first cooling passage 1221a may be provided as a smooth surface to reduce friction with the extrusion substrate 200.

In another embodiment, the extrusion substrate may indirectly exchange heat with the refrigerant.

Indirect heat exchange means that there is no direct contact between heat exchange mediums during heat exchange. That is, the extrusion substrate does not directly contact with the refrigerant, but indirectly exchanges heat with the refrigerant through an intermediate piece.

Exemplarily, referring to FIG. 15, the hardening device 120 may include a refrigerant supply (not shown) and a third cooling pipe 124. The third cooling pipe 124 includes a second inner pipe 1241 and a second outer pipe 1242. The second inner pipe 1241 is provided with a heat exchange passage 1241a. A second refrigerant cavity 124a for storing refrigerant is formed between the second inner pipe 1241 and the second outer pipe 1242. The heat exchange passage 1241a is configured to accommodate the extrusion substrate 200. The refrigerant supply communicates with the second refrigerant cavity 124a. The extrusion substrate 200 extruded from the extruder 110 enters the heat exchange passage 1241a and is in contact with the second inner pipe 1241 to perform heat exchange, and the second inner pipe 1241 which has absorbed the heat of the extrusion substrate 200 exchanges heat with the refrigerant. That is, the extrusion substrate 200 indirectly exchanges heat with the refrigerant through a side wall of the second inner pipe 1241.

It should be noted that an inner surface of the second inner pipe 1241 forming the heat exchange passage 1241a is generally a smooth surface.

For example, the roughness of the inner surface of the second inner pipe 1241 may range from Ra1.2 µm to Ra0.08 µm (inclusive of Ra1.2 µm and Ra0.08 µm). There is less friction between the smooth inner surface and the outer surface of the extrusion substrate 200, which will not cause the deformation of the extrusion substrate 200.

The advantage of indirect heat exchange between the extrusion substrate and the refrigerant is that it can effectively avoid problems such as expansion, deformation and cracking which may occur when the extrusion substrate comes into direct contact with the refrigerant.

In one embodiment, after the extrusion substrate is cooled and hardened, the manufacturing method may further include the following operation. Hot air drying of the extrusion substrate is performed.

Hot air drying is to evaporate the moisture in the extrusion substrate after being cooled and hardened by a hot air blower, an oven, a drying oven, or the like. If the extrusion substrate contains a lot of volatile lubricant, hot air drying can also remove the volatile lubricant.

Exemplarily, referring to FIG. 2 to FIG. 5, the manufacturing apparatus 100 may be provided with a hot air drying device 130, and the hot air drying device 130 includes a box body 131, a heating plate 132 disposed in the box body 131, and a fan 133 communicating with the box body 131. The heating plate 132 is configured to heat the air in the box body 131, and the fan 133 cooperates with the heating plate 132 to form a thermal cycle in the box body 131, to allow moisture or the like in the extrusion substrate 200 to be evaporated.

Referring to FIG. 2 to FIG. 5, in order to facilitate conveying of the extrusion substrate 200, the manufacturing apparatus 100 may be provided with a second conveying device 160, the second conveying device 160 is provided with a second conveying belt 161, and a part of the second conveying belt 161 is located in the box body 131. The second conveying device 160 may convey the cooled and hardened extrusion substrate 200 into the box body 131 through the second conveying belt 161, and convey the extrusion substrate 200 after the hot air drying out of the box body 131.

Further, referring to FIG. 2 to FIG. 5, a plurality of heating plates 132 may be provided in the box body 131, some of the plurality of heating plates 132 may be provided above the second conveying belt 161, and some of the plurality of heating plates 132 may be provided below the second conveying belt 161. That is, hot air may heat the extrusion substrate 200 from both upward and downward directions, to uniformly heat the extrusion substrate 200, which may not only improve the stability of the shape of the extrusion substrate 200, but also improve the dehydration efficiency and reduce the load of a single heating plate.

The temperature for the hot air drying may be adjusted as needed. Exemplarily, the temperature for the hot air drying may range from 50 °C to 200 °C (inclusive of 50 °C and 200 °C).

When the temperature for the hot air drying is lower than 50 °C, the drying time is long, the production efficiency is low, the required apparatus occupies a large area, and the production cost is high. When the temperature for the hot air drying is about 100 °C, the extrusion substrate can be slowly dried at a low temperature, which may retain the aroma components and effective substances (such as plant alkaloids and smoking agents) in the raw materials as much as possible while effectively reducing the moisture in the extrusion substrate, to ensure the product quality. When the temperature for the hot air drying is higher than 200 °C, the moisture on the surface of the extrusion substrate evaporates rapidly, while the moisture inside the extrusion substrate evaporates slowly, resulting in the rapid shrinkage of the surface of the extrusion substrate, which is not conducive to the uniformity and stability of the shape and components of the extrusion substrate. Moreover, the aroma components and effective substances (such as plant alkaloids and smoking agents) in the raw materials are easily lost due to heat, which leads to the high manufacturing cost, the reduced product quality and the poor user experience. Therefore, the temperature for the hot air drying ranging from 50 °C and 200 °C is a reasonable temperature range.

The extrusion substrate after the hot air drying has small shrinkage rate and short drying time, and the method and apparatus are mature, which is convenient to realize the continuous production. The room temperature extrusion molding and the hot air drying are used together, the apparatus cost is low, the continuous production can be performed, the production efficiency is high, the manufacturing cost is low, the extrusion substrate is uniform and stable, and the processability is high.

More preferably, the temperature for the hot air drying may range from 75 °C to 125 °C (inclusive of 75 °C and 125 °C).

In one embodiment, during the hot air drying, auxiliary drying may be performed by at least one of microwaves or ultrasonic waves. That is, the auxiliary drying may be performed by microwaves, or the auxiliary drying may be performed by ultrasonic waves, or the auxiliary drying may be performed by microwaves and ultrasonic waves.

The auxiliary drying performed by microwaves means that microwaves generated by a microwave generating device make the polar molecules inside the extrusion substrate vibrate violently to generate heat, to promote the volatilization of moisture in the extrusion substrate. The auxiliary drying performed by microwaves can reduce the drying time and improve the retention rate of aroma components and effective substances in the extrusion substrate.

The auxiliary drying performed by ultrasonic waves means that the moisture inside the extrusion substrate produces a "cavitation" effect by a ultrasonic device, which reduces the moisture volatilization temperature and promotes the moisture volatilization. The auxiliary drying performed by ultrasonic waves also can reduce the drying time and improve the retention rate of aroma components and effective substances in the extrusion substrate.

Exemplarily, referring to FIG. 3 and FIG. 5, the hot air drying device 130 may be provided with an auxiliary device 134 in the box body 131, and the auxiliary device 134 may be arranged above the heating plate 132, or may be arranged below the heating plate 132, or may be arranged in a lateral direction of the conveying belt. When a plurality of auxiliary devices 134 are provided in the box body 131, the plurality of auxiliary devices 134 may be arranged in at least two of the following positions: arranged above the heating plate 132, blow the heating plate 132 and in the lateral direction of the conveying belt.

The range of microwaves or ultrasonic waves emitted by the auxiliary device 134 arranged above or below the heating plate 132 may allow for more uniform heating of the extrusion substrate 200. The energy loss of microwaves or ultrasonic waves emitted by the auxiliary device 134 arranged in the lateral direction of the conveying belt is less, which may increase the overall heating rate of the extrusion substrate 200.

In one embodiment, the moisture content in the extrusion substrate after the hot air drying may range from 3% to 20% (inclusive of 3% and 20%) of the total weight of the extrusion substrate.

When the moisture content in the extrusion substrate is less than 3%, the aerosol-generating substrate generates more impurity gases in the suction process of the user, which reduces the suction experience of the user. In addition, if the dried extrusion substrate is subsequently subjected to other processing (i.e., the operation S20 is not the last operation of the manufacturing method), the dried extrusion substrate is brittle in the subsequent processing process, which not only leads to a high defect rate in the subsequent production, but also increases the production cost. When the moisture content in the extrusion substrate is higher than 20%, the moisture content of the smoke gas of the aerosol-generating substrate during the heating and suction process is higher. The temperature of the smoke gas is not easy to decrease, easily causing the user to "burn his mouth" during the suction process, which may reduce the suction experience of the user. Therefore, controlling the moisture content in the dried extrusion substrate to be in the range of 3% to 20% of the total weight of the extrusion substrate can effectively improve the suction experience of the user, and in addition, for the extrusion substrate that are subjected to other processing after drying, the defect rate of subsequent production can also be reduced.

More preferably, the moisture content in the extrusion substrate after the hot air drying may range from 4% to 13% (inclusive of 4% and 13%) of the total weight of the extrusion substrate.

The drying of the extrusion substrate is not limited to the hot air drying, and in other embodiments, the extrusion substrate may be dried by microwave heating, resistance heating, infrared heating, or the like.

In one embodiment, before the hot air drying of the extrusion substrate is performed, the manufacturing method may further include the following operation. The extrusion substrate after being cooled and hardened is slit.

The length of the extrusion substrate extruded by the room temperature extrusion molding is generally relatively long. Therefore, the extrusion substrate can be slit into the desired length according to different usage scenarios.

Referring to FIG. 2 to FIG. 5, the manufacturing apparatus 100 is provided with a slitting device 150, the slitting device 150 is provided with a slitting tool (not shown) by which the extrusion substrate 200 is slit.

There are multiple slitting manners. For example, in one embodiment, physical contact slitting in which the slitting tool is in contact with the extrusion substrate may be employed. That is, the slitting tool is in direct contact with the extrusion substrate. The physical contact slitting includes, but is not limited to, rotary hob cutting, cutting blade cutting, wire cutting, roll cutting, extruding and the like.

In another embodiment, non-physical contact slitting in which the slitting tool is spaced apart from the extrusion substrate may also be employed. That is, the slitting tool itself is not in physical contact with the extrusion substrate. The non-physical contact slitting includes, but is not limited to, laser cutting, plasma cutting, air knife, water knife, and the like.

Since the hardness of the extrusion substrate is increased after the extrusion substrate is cooled and hardened, the extrusion substrate after being cooled and hardened is easier to be slit, and the extrusion substrate after being slit will not be deformed, and the cutting surface is more neat and complete.

In addition, the extrusion substrate can also be calibrated for circumference and straightness with a jig prior to slitting.

In some embodiments, there may also be no slitting operation, that is, an extrusion substrate with a set length can be directly extruded by the room temperature extrusion molding. For example, after the extrusion substrate is extruded by the vertical extrusion, the extrusion substrate can naturally detach under the action of its own gravity when it reaches or approaches the set length, which reduces subsequent slitting operation and thus reduces the production cost.

In one embodiment, the components of the mixed material include a solid material and a liquid material, and before the room temperature extrusion molding of the mixed material is performed, the manufacturing method may further include the following operation. The solid material and the liquid material are divided into two parts for separate feeding.

The solid material refers to a material in a solid state, and the liquid material refers to a material in a liquid state. That is, some components in the mixed material are solid, some components in the mixed material are liquid, and the solid material and the liquid material are mixed to form the mixed material.

It should be noted that the mixed material formed by mixing the solid material and the liquid material are in a uniform form and cannot be divided into a solid material and a liquid material.

Exemplarily, in case that the plant raw material, the auxiliary agent raw material, and the adhesive raw material are solid material, and the smoking agent raw material and the flavor raw material are liquid material, the solid material such as the plant raw material, the auxiliary agent raw material, and the adhesive raw material, and the liquid material such as the smoking agent raw material and the flavor raw material may be added to the barrel of the extruder respectively, so that the solid material and the liquid material are mixed in the barrel of the extruder.

The advantage of dividing the solid material and the liquid material into two parts for separate feeding is that it can reduce the pre-treatment cost of the mixed material, ensure the continuity of the production process, and improve the consistency and uniformity of products while improving the production efficiency.

Further, the operation that the solid material and the liquid material are divided into two parts for separate feeding may include the following operation. The solid material is adding. The liquid material is added to the solid material when the solid material moves to an adding position of the liquid material along a material conveying direction.

That is, the solid material is first added to the extruder, the solid material will move toward the extrusion die along the material conveying direction after the solid material enters the barrel of the extruder, and the liquid material is then added to the extruder when the solid material moves to the adding position of the liquid material along the material conveying direction, to allow the liquid material and the solid material to be mixed in the barrel of the extruder.

In addition, the feeding amount and the feeding speed of the materials can also be determined according to the production speed of the extruder and the proportion of each of various raw materials of the mixed material.

Exemplarily, referring to FIG. 2 to FIG. 5, a solid material feeding port 114 and a liquid material feeding port 115 may be arranged on the extruder 110, the solid material feeding port 114 and the liquid material feeding port 115 communicate with the barrel 111 of the extruder 110, and the liquid material feeding port 115 is located downstream of the solid material feeding port 114 along the material conveying direction.

There may be one solid material feeding port 114 or a plurality of solid material feeding ports 114. When a plurality of solid material feeding ports 114 are provided, the same solid material may be added to each of the plurality of solid material feeding ports 114, or different solid materials may be added to the plurality of solid material feeding ports 114 respectively.

Similarly, there may be one liquid material feeding port 115 or a plurality of liquid material feeding ports 115. When a plurality of liquid material feeding ports 115 are provided, the same liquid material may be added to each of the plurality of liquid material feeding ports 115, or different liquid materials may be added to the plurality of liquid material feeding ports 115 respectively.

In addition, both the plurality of solid material feeding ports 114 and the plurality of liquid material feeding ports 115 may be provided in the form of a detachable structure, to facilitate the assembly of the solid material feeding ports 114 and the liquid material feeding ports 115 in the required number.

The extruder conveys the mixed material mainly depending on the rotation of the screw, but the screw and the inner wall of the barrel of the extruder are not completely sealed, that is, there is a gap between the screw and the inner wall of the barrel of the extruder. If the liquid material is added first, the liquid material is easily leaked from the gap. Therefore, the solid material is added first, and the liquid material is added when the solid material moves to the adding position of the liquid material along the material conveying direction, which may better avoid the leakage of the liquid material.

In some embodiments, the mixed material may not be fed separately as a solid material and a liquid material. For example, the solid material and the liquid material may be mixed first to form a mixed material (referred to as mixed slurry feeding), and then the mixed material may be added to the barrel of the extruder.

The advantage of mixed slurry feeding is that the mixed material has good consistency, which can ensure the uniformity and stability of products.

In addition, referring to FIG. 3 and FIG. 5, for mixed slurry feeding, a screw 112 may additionally be arranged at a feeding port (when mixed slurry feeding is used, the solid material feeding port 114 in FIG. 3 and FIG. 5 is equivalent to the feeding port), to further homogenize the mixed slurry.

In some embodiments, referring to FIG. 3 and FIG. 5, the extruder 110 may also be provided with a vacuum interface 117 communicating with the barrel 111, and the interior of the barrel 111 of the extruder 110 may be vacuumized after the feeding, to allow a negative pressure to be formed in the barrel 111. In this way, the mixed material may be defoamed, and the various raw materials in the mixed material can be fully mixed.

In one embodiment, after the hot air drying of the extrusion substrate is performed, the manufacturing method may further include the following operation. The extrusion substrate is packaged.

Exemplarily, referring to FIG. 2 to FIG. 5, the manufacturing apparatus 100 may be provided with a packaging device 180 configured to package the extrusion substrate 200.

The packaging may be done in a variety of manners, and exemplarily, a packaging layer may be wrapped around the outer surface of the extrusion substrate.

The packaging layer includes but is not limited to media consumables such as cigarette paper, paper tubes, tin foil paper, and the like. The extrusion substrate wrapped by the packaging layer is equivalent to the finished product of the aerosol-generating substrate.

In some embodiments, the extrusion substrate wrapped by the packaging layer may also be combined with other functional segments, such as a cooling segment, a filter segment, and the like, to form an aerosol-generating article.

Exemplarily, the extrusion substrate may also be hermetically packaged.

That is, the extrusion substrate may be hermetically packaged directly without wrapping the packaging layer around the outer surface of the extrusion substrate, for example, the extrusion substrate may be encapsulated in a blister pack container. The extrusion substrate after being hermetically packaged is also equivalent to the finished product of the aerosol-generating substrate. The extrusion substrate after being hermetically packaged can be used directly on an electronic atomization device after the packaging is removed.

In the description of the present application, an expression with reference to the terms "in an embodiment", "in some embodiments", "in other embodiments", "in still other embodiments", "exemplarily" or the like means that specific features, structures, materials, or characteristics described in combination with the embodiment or example are included in at least one embodiment or example of the embodiments of the present application. In the present application, the schematic expression of the above terms is not necessarily directed to the same embodiment or example. Moreover, the specific features, structures, materials, or characteristics described may be combined with each other in any one or more embodiments or examples in a suitable manner. Furthermore, those skilled in the art can combine different embodiments or examples described in the present application and features of different embodiments or examples without contradicting each other.

The foregoing is merely a preferred embodiment of the present application, and is not intended to limit the present application, and various modifications and variations can be made for those skilled in the art. Any modifications, substitutions and improvements made within the spirit and principles of the present application should be included within the scope of protection of the present application.

## Claims

1. A manufacturing method for manufacturing an aerosol-generating substrate, comprising:
performing room temperature extrusion molding of a mixed material to allow the mixed material to form an extrusion substrate; and
cooling and hardening the extrusion substrate.

2. The manufacturing method according to claim 1, wherein cooling and hardening the extrusion substrate comprises:
placing the extrusion substrate in a low temperature environment for cooling, wherein a temperature in the low temperature environment is lower than a hardening temperature of the extrusion substrate.

3. The manufacturing method according to claim 2, wherein the hardening temperature ranges from -100 °C to 60 °C, and the temperature in the low temperature environment ranges from - 270 °C to 60 °C.

4. The manufacturing method according to claim 1, wherein cooling and hardening the extrusion substrate comprises:
directly exchanging heat between the extrusion substrate and a refrigerant; or indirectly exchanging heat between the extrusion substrate and a refrigerant.

5. The manufacturing method according to claim 4, wherein directly exchanging heat between the extrusion substrate and the refrigerant comprises:
ejecting the refrigerant onto an outer surface of the extrusion substrate.

6. The manufacturing method according to any one of claims 1 to 5, wherein a hardness of the extrusion substrate after being cooled and hardened ranges from 1 HB to 200 HB; and/or
a temperature of the extrusion substrate after being cooled and hardened ranges from - 50 °C to 5 °C.

7. The manufacturing method according to any one of claims 1 to 5, wherein an extrusion temperature for the room temperature extrusion molding ranges from 35 °C to 70 °C; and/or
an extrusion pressure for the room temperature extrusion molding ranges from 0.5 bar to 300 bar.

8. The manufacturing method according to claim 7, wherein the extrusion pressure ranges from 20 bar to 80 bar.

9. The manufacturing method according to any one of claims 1 to 5, wherein an extrusion manner for the room temperature extrusion molding is one of horizontal extrusion, vertical extrusion, or oblique extrusion.

10. The manufacturing method according to any one of claims 1 to 5, wherein after cooling and hardening the extrusion substrate, the manufacturing method further comprises:
performing hot air drying of the extrusion substrate.

11. The manufacturing method according to claim 10, wherein a temperature for the hot air drying ranges from 50 °C to 200 °C.

12. The manufacturing method according to claim 10, wherein during the hot air drying, the manufacturing method further comprises:
performing auxiliary drying by at least one of microwaves or ultrasonic waves.

13. The manufacturing method according to claim 10, wherein moisture content in the extrusion substrate after the hot air drying ranges from 3% to 20% of a total weight of the extrusion substrate.

14. The manufacturing method according to claim 10, wherein before performing the hot air drying of the extrusion substrate, the manufacturing method further comprises:
slitting the extrusion substrate after being cooled and hardened.

15. The manufacturing method according to any one of claims 1 to 5, wherein in 100 parts by weight of the mixed material, a plant raw material is 30 to 90 parts, an auxiliary agent raw material is 1 to 15 parts, a smoking agent raw material is 5 to 30 parts, an adhesive raw material is 1 to 10 parts, and a flavor raw material is 1 to 15 parts.

16. A manufacturing apparatus for manufacturing an aerosol-generating substrate, comprising:
an extruder, configured to perform room temperature extrusion molding of a mixed material to allow the mixed material to form an extrusion substrate; and
a hardening device, configured to cool and harden the extrusion substrate.

17. The manufacturing apparatus according to claim 16, wherein the hardening device comprises a refrigerant supply and a container, the container is provided with an accommodating cavity configured to accommodate the extrusion substrate, and the refrigerant supply is configured to supply a refrigerant to the accommodating cavity.

18. The manufacturing apparatus according to claim 17, wherein the container is provided with a liquid inlet groove communicating with the accommodating cavity.

19. The manufacturing apparatus according to claim 17, wherein the manufacturing apparatus comprises a first conveying device provided with a first conveying belt, and a part of the first conveying belt is located in the accommodating cavity.

20. The manufacturing apparatus according to claim 19, wherein a plurality of medium accommodating grooves are provided on the first conveying belt, and extend along a conveying direction of the first conveying belt.

21. The manufacturing apparatus according to claim 16, wherein the hardening device comprises a refrigerant supply and a first cooling pipe, the first cooling pipe comprises a pipe body provided with a first cooling passage, and at least one refrigerant ejection port provided on a side wall of the pipe body and communicating with the first cooling passage, the first cooling passage is configured to accommodate the extrusion substrate, and the refrigerant supply ejects a refrigerant into the first cooling passage through the refrigerant ejection port.

22. The manufacturing apparatus according to claim 21, wherein the first cooling pipe comprises a plurality of refrigerant ejection ports, some of the plurality of refrigerant ejection ports are provided at intervals along a peripheral side of the pipe body, and some of the plurality of refrigerant ejection ports are provided at intervals along an extension direction of the first cooling passage; and/or
the refrigerant ejection port is provided with an inlet end, and an outlet end communicating with the first cooling passage, the refrigerant ejection port is disposed inclined with respect to an extension direction of the first cooling passage, and the outlet end is located at a side of the inlet end facing away from an inlet of the first cooling passage.

23. The manufacturing apparatus according to claim 16, wherein the hardening device comprises a refrigerant supply and a second cooling pipe, the second cooling pipe comprises a first inner pipe and a first outer pipe, the first inner pipe is provided with a second cooling passage accommodating the extrusion substrate, a first refrigerant cavity is formed between the first inner pipe and the first outer pipe, at least one communication passage communicating with the first refrigerant cavity and the second cooling passage is arranged on a side wall of the first inner pipe, and the refrigerant supply communicates with the first refrigerant cavity.

24. The manufacturing apparatus according to claim 23, wherein there are a plurality of communication passages, some communication passages of the plurality of communication passages are provided at intervals along a peripheral side of the first inner pipe, and some communication passages of the plurality of communication passages are provided at intervals along an extension direction of the second cooling passage; and/or
the communication passage is provided with an inlet end communicating with the first refrigerant cavity, and an outlet end communicating with the second cooling passage, the communication passage is disposed inclined with respect to an extension direction of the second cooling passage, and the outlet end is located at a side of the inlet end facing away from an inlet of the second cooling passage.

25. The manufacturing apparatus according to claim 16, wherein the hardening device comprises a refrigerant supply and a third cooling pipe, the third cooling pipe comprises a second inner pipe and a second outer pipe, the second inner pipe is provided with a heat exchange passage, a second refrigerant cavity for storing a refrigerant is formed between the second inner pipe and the second outer pipe, the heat exchange passage is configured to accommodate the extrusion substrate, and the refrigerant supply communicates with the second refrigerant cavity.
